Europäisches Patentamt

European Patent Office

Office européen des brevets

(11) Publication number: **0 581 812 B1**

(12) # EUROPEAN PATENT SPECIFICATION

(45) Date of publication of patent specification: **06.12.95**

(51) Int. Cl.6: **C04B 28/08**, C04B 28/04, E21B 33/13

(21) Application number: **92908879.7**

(22) Date of filing: **23.04.92**

(86) International application number: **PCT/EP92/00922**

(87) International publication number: **WO 92/19568 (12.11.92 92/28)**

(54) METHOD OF CEMENTING A WELL.

(30) Priority: **26.04.91 US 691903**

(43) Date of publication of application: **09.02.94 Bulletin 94/06**

(45) Publication of the grant of the patent: **06.12.95 Bulletin 95/49**

(84) Designated Contracting States: **GB NL**

(56) References cited:
FR-A- 2 615 183
GB-A- 2 078 280
US-A- 3 168 139
US-A- 3 499 491
US-A- 5 058 679

CHEMICAL ABSTRACTS, vol. 104, no. 13, 13 January 1986, Columbus, Ohio, US; abstract no. 9858J, 'Injection compositions for insertion holes of piles' page 263

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **NAHM, James, Jang, Woo**
**3751 Carlon Street**
**Houston, TX 77005 (US)**
Inventor: **HALE, Arthur, Herman**
**7135 Hendon Lane**
**Houston, TX 77074 (US)**
Inventor: **COWAN, Kenneth, Michael**
**1019 Sugardale Court**
**Sugarland, TX 77478 (US)**

Rank Xerox (UK) Business Services
(3.10/3.09/3.3.3)

EP 0 581 812 B1

**Description**

The present invention relates to improvements in drilling mud-cement compositions for cementing oil and gas wells. The compositions are characterized by improved setting at low temperatures and resistance to strength retrogression at temperatures above 110-121 °C (230-250 °F).

The general procedure of drilling an oil or gas well includes drilling a borehole using a drilling mud. Subsequent to drilling the borehole, casing is run into the well preparatory to placing a cement slurry in the annulus between the outside of the casing and the borehole wall. Wells with temperatures above 110-121 °C (230-250 °F) present special cementing problems.

The invention further relates to converting a drilling fluid into a mud-cement which is used to cement a casing in a borehole. U.S. patent specification No. 3 168 139 discloses a method of cementing a well comprising

preparing a mud-cement by admixing a drilling mud and a cement material;

displacing the mud-cement to a preselected location in the well; and

allowing the mud-cement to harden and set up.

In the known method the cement material is preferably a hydraulic cement, for example all mixtures of lime, silica and alumina, or of lime and magnesia, silica and alumina and iron oxide, hydraulic limes, grappier cements, natural cements, calcium sulphate, Portland cements and pozzolan cement which include slag cements made from slaked lime and granulated blast furnace slag. In the known method Portland cement is preferred.

U.S. patent specification No. 3 499 491 discloses converted drilling fluid compositions using a C-Mix. In the specification the term "C-Mix" is used to designate a mixture of 20 to 60 wt% Portland cement, 10 to 50 wt% fly ash, 0 to 15 wt% soda ash, 0 to 50 wt% natural pozzolan, and 5 to 30 wt% powdered sodium silicate glass. These cement compositions, however are particularly temperature sensitive. In other words, if wellbore temperatures exceed 110-121 °C (230-250 °F), the cement compositions have a tendency to undergo thermal strength retrogression. Since the cement composition contains a substantial amount of Portland cement, the set cement composition has a tendency to undergo strength retrogression at temperatures above approximately 110-121 °C (230-250 °F). This also applies to any converted drilling fluids suggested in U.S. patent specifications No 4 883 125 and No. 4 176 720.

Thermal strength retrogression is a particular problem in cementing any deep, hot wells or wells associated with thermal recovery processes. For example, the Belridge field in California has two major producing zones, the Tulare Sands and the Diatomite/Brown Shale. The Tulare zone has been extensively steam flooded for several years such that temperatures in producing intervals range from 121 °C to 400 °C (250 °F to 400 °F). The Diatomite/Brown Shale formation lies beneath the Tulare Sands and extends from 214 m to 1 219 m (700 feet to 4 000 feet). Since C-Mix undergoes severe strength retrogression at temperatures 110-121 °C (230-250 °F), it cannot be used in cementing wells in this field.

Wells with low bottom hole temperatures also present special cementing problems. For example, wells in the North Hobbs field, New Mexico, have low bottom hole temperatures, e.g., approximately 38 °C (100 °F) at a depth of 1 219 m (4 000 feet). In addition, these wells are normally drilled with 30 kg/m$^3$ (10.5 lb/gal) salt saturated muds. A low temperature, salt tolerant mud-cement formulation is needed to cement these wells. Another example for low temperature wells are those deep-water wells in the Gulf of Mexico. Mud-lime temperatures range between 4 °C and 16 °C (40 °F and 60 °F). Surface casing cements for these wells must be activated at low temperatures.

Accordingly, the present invention is directed to overcoming the above-noted problems in the art and provides a solution as more particularly described hereinafter.

It is the primary purpose of the present invention to provide drilling mud-cement compositions which, after setting up in an oil or gas well, are suitable for cementing wells with a wide temperature range; e.g., 4-316 °C (40-600 °F).

To this end the method of cementing a well according to the present invention is characterized in that the cement material is a mixture of blast furnace slag and/or powdered glass, and C-Mix which is a mixture of 20 to 60 wt% Portland cement, 10 to 50 wt% fly ash, 0 to 15 wt% soda ash, 0 to 50 wt% natural pozzolan, and 5 to 30 wt% powdered sodium silicate glass, wherein the amount of C-Mix is between 40 and 90 %wt of the total amount of blast furnace slag, C-Mix and powdered glass.

In the specification the term "S-Mix" will be used to designate a formulation prepared by adding about 100 wt% blast furnace slag (basis S-Mix) to a water-base mud and one or more alkaline or other activating agents. S-Mix is designed to use for cementing wells with wide temperatures ranging from approximately 4 °C to 316 °C (40 °F to 600 °F).

2

Blast furnace slag is a by-product of the iron ore refining process. Only quenched slag known as granulated, pelletized or rapid air blown slag has high hydraulic properties and is useful for this invention. Chemical activation of slag is entirely different from Portland cement. With Portland cement, upon addition of water, hydration of the cement begins. Slag will not react in water at moderate temperatures, but when chemically activated, hydration of slag will continue to set hard.

An alternative to the use of blast furnace slag is particulate glass, e.g., ground glass (ground to pass 325 mesh) or powdered glass. Glass is an amorphous, super cooled liquid material comprising silica, soda ash, and lime, that is practically inert to all chemicals. It is theorized, although the present invention is not limited to this theory, that the high surface area of ground glass can be a source of reactive sodium silicate at elevated temperatures, and especially in a high pH environment. In the specification and in the claims the expression "powdered glass" will be used to designate particulate glass, ground glass or powdered glass.

In the specification the term "HTC-Mix" will be used to a high temperature version of C-Mix, is prepared by adding 40 to 90 %wt of C-Mix (basis HTC-Mix which is the total amount of blast furnace slag, powdered glass and C-Mix) to blast furnace slag, or powdered glass, or to a mixture of blast furnace slag and powdered glass.

Other purposes, distinctions over the art, advantages and features of the invention will be apparent to one skilled in the art upon review of the following. Slurries of C-Mix achieve high compressive strength on hardening, provide excellent rheology, and have zero-free water, low fluid loss, acceptable thickening times, and very low permeability. However, a problem with C-Mix is its thermal stability at high temperatures. C-Mix slurries, which contain Portland cement only and non-hydraulic mud materials such as bentonite and low-gravity solids, show strength retrogression at temperatures above 110-121 °C (230-250 °F) (see Table 1).

TABLE 1

| The effect of temperature and C-Mix concentration on compressive strength of C-Mix prepared with a 1 438 kg/m$^3$ (12 lb/gal) seawater lignosulphonate mud. | | | | | | |
|---|---|---|---|---|---|---|
| C-Mix Conc. | 200 lb/bbl | | 250 lb/bbl | | 300 lb/bbl | |
| Device Used | UCA* | API | UCA | API | UCA | API |
| Temperature | Compressive Strength (psi) | | | | | |
| 140 °F | 1 420 | - | 1 880 | 2 930 | - | - |
| 180 °F | 1 150 | 1 500 | 1 640 | 2 370 | - | - |
| 220 °F | 1 040 | 1 280 | 1 480 | 2 880 | 1 920 | 2 830 |
| 260 °F | 690 | - | 360 | 260 | 710 | 510 |
| 300 °F | 110 | 150 | 280 | 310 | 490 | 430 |
| C-Mix Conc. | 570 kg/m$^3$ | | 712 kg/m$^3$ | | 855 kg/m$^3$ | |
| Device Used | UCA* | API | UCA | API | UCA | API |
| Temperature | Compressive Strength (MPa) | | | | | |
| 60 °C | 9.79 | - | 12.96 | 20.20 | - | - |
| 82 °C | 7.93 | 10.34 | 11.31 | 16.34 | - | - |
| 104 °C | 7.17 | 8.83 | 10.20 | 19.86 | 13.24 | 19.51 |
| 127 °C | 4.76 | - | 2.48 | 1.79 | 4.90 | 3.52 |
| 149 °C | 0.76 | 1.03 | 1.93 | 2.14 | 3.38 | 2.96 |

*UCA - Ultrasonic Cement Analyzer by Halliburton

Strength retrogression is primarily due to the breakdown of hydration products of Portland cement. Retrogression is amplified by the higher water content of C-Mix slurries in the presence of non-hydraulic materials in the mud.

In accordance with the present invention it has been discovered that admixing with a drilling mud blast furnace slag and/or powdered glass (S-Mix) and additionally C-Mix (HTC-Mix) produces new cementing materials which are resistant to thermal strength retrogression at temperatures up to and exceeding 232 °C (450 °F), and which have major benefits including low slurry density, thixotropic nature, reduction of mud disposal volumes, simple operation, low cost, good rheology, zero-free water, low fluid loss, low permeability, high tolerance to contamination, and high compressive strengths.

An improved mud conversion process has been invented by adding blast furnace or particulate glass slag and one or more activating agents to drilling mud. Cementing with S-Mix does not require dry blending of materials if a composition with 100% slag is utilized. S-Mix jobs can be run using rig equipment without using cement pumping units. Bulk or sacked slag or glass can be added to the mud through the rig mud material mixing units. Dry or liquid chemical activators can be metered into the stream of mud. Bulk cement service and pumping charges can be reduced or eliminated since cementing operations are handled with the rig equipment if S-Mix is mixed with 100% slag.

In general, both batch mixing and continuous mixing are suitable for large volume HTC-Mix or S-Mix operations.

The present invention is most useful with the following water-base drilling muds: spud muds, seawater muds, salt water muds, brine muds, lime muds, gypsum muds, lignosulphonate muds, polymer (such as PHPA which is partially hydrolyzed polyacrylamide) muds, KCl inhibited muds, emulsion (oil in water) muds, surfactant muds, etc. This invention is expected to be applicable in all water-based fluids. Some hydrocarbons such as diesel, mineral oil or crude oil, or polyalcohol-type fluids can be tolerated in this invention.

S-Mix can be prepared by adding 100 wt% blast furnace slag to a water-base mud and one or more alkaline or other activating agents such as sodium sulphate. For example, although an S-Mix composition may have 75% slag, 25% Portland cement, and small amounts of activators, the composition with 100% slag is preferred over the former. Suitable activators for S-Mix include sodium hydroxide, potassium hydroxide, sodium carbonate, potassium carbonate, sodium sulphate, sodium silicates, and other alkaline materials.

A suitable activator for the HTC-Mix is sodium silicate; other suitable activators include fluorides such as sodium fluoride, sodium silicofluoride, magnesium silicofluoride, zinc silicofluoride, and alkaline material such as sodium carbonate, potassium carbonate, sodium hydroxide, potassium hydroxide, and calcium hydroxide. The cement may be either a construction-grade cement or any API specified Portland cement.

Both HTC-Mix and S-Mix slurries are prepared by adding a dispersant (thinner and retarder) and HTC-Mix or S-Mix materials in a water-base drilling fluid. Of course, amounts of HTC-Mix or S-Mix determine slurry density, compressive strength and yield (volume increase). The specific dispersant(s) needed and the amount(s) required should then be determined. Rheological properties and cement slurry properties such as thickening time, free water, fluid loss, settling, etc. may also be determined by the dispersant(s).

The strength development of HTC-Mix or S-Mix slurries is heavily influenced by their concentrations in the mud and by the thinner or dispersants used. The type of thinner and its concentration are major variables that influence strength development. Thinners are also employed to control viscosity, thickening time, and setting time of the HTC-Mix or S-Mix. Three commercial thinners have been found to be especially beneficial for the HTC-Mix or S-Mix: 1) chrome-free sugar-containing lignosulphonates; 2) chrome-free de-sugared lignosulphonate; and 3) chrome-free sulfomethylated tree bark extract (a modified humic acid). About 5.7 to 23 kg/m$^3$ (two to eight lb/bbl) of such thinners is usually acceptable, although 43 to 57 kg/m$^3$ (15 to 20 lb/bbl) can be used. Chrome-free sugar-containing lignosulphonate is a powerful retarder for both HTC-Mix and S-Mix. The retarding effect of chrome-free de-sugared lignosulphonate is moderate; chrome-free sulfomethylated tree bark extract may be used alone or added to chrome-free de-sugared lignosulphonate to produce a more efficient retarder and at the same time control rheology of the HTC-Mix or S-Mix slurry.

For example, lignosulphonate dispersants may not be desirable for non-dispersed polymer muds since the lignosulphonate have a tendency to promote dispersion of drill cuttings. Polymeric dispersants such as "CYPAN" (high molecular weight sodium polyacrylate by American Cyanamid), "NEWTHIN" (low molecular sodium polyacrylate from Milpark), and "MILTEMP" (sulphonated styrene maleic anhydride from Milpark) are very effective in thinning and retarding the HTC-Mix or S-Mix slurries. Where formation conditions dictate, a non-dispersed system can easily be converted to a dispersed system to tolerate a higher degree of drilled solids. This can be done by adding lignosulphonate dispersants to the system.

HTC-Mix or S-Mix formulated with slag, e.g., blast furnace slag (tradename "NEWCEM" by Atlantic Cement Company and Colton slag from California Portland Cement Company), or particulate glass, e.g., ground or powdered glass, can set up at low temperatures (e.g., 4 °C, 40 °F) and yet resist strength retrogression at temperatures of up to approximately 316 °C (600 °F) and higher, depending upon the specific formulation of the HTC-Mix and S-Mix and other conditions.

Conventional slag cements (mixtures of slag and Portland cement in water) have many useful properties directly or indirectly related with this invention. Slag cements resist degradation by acidic gases such as carbon dioxide and hydrogen sulphide, acids, sulphate water, and have demonstrated higher compressive strength than Portland cement. Slag cements produce a slurry that is lighter than Portland cements since its density is lower than Portland cement (specific gravity 2.90 vs. 3.14). Most importantly, properly formulated slag cements are thermally stable to 815 °C (1 500 °F) and have a lower heat of hydration. The slag cements harden below its freezing point. In general, a small increase in temperature can cause a substantial increase of compressive strength.

The invention will now be described in more detail by way of example with reference to the examples.

The first examples relate to laboratory testing of HTC-Mix. Table 2 lists several suitable HTC-Mix formulations and their compressive strengths measured after aging at 204 °C (400 °F) for two weeks. High temperature aging tests were conducted at 204 °C (400 °F) in order to accelerate the process for thermal strength retrogression in the test specimens in a short period of time. Compressive strength measurements of specimens first cured at 60 °C (140 °F) for three days, and then aged at 204 °C (400 °F), were used for evaluation. A major screening criterion was that a high temperature HTC-Mix formulation should have a minimum compressive strength of 5.52 MPa (800 psi) after aging at 204 °C (400 °F) for two weeks and otherwise have good rheological properties and normal setting behaviour at 60 °C (140 °F).

As shown in Table 2, C-56, C-57 and other formulations met the selection criteria. Both C-56 and C-57 had compressive strengths greater than 5.52 MPa (800 psi) after aging at 204 °C (400 °F) for two weeks. C-56 utilized ground glass, while C-57 used "NEWCEM" (commercial granulated blast furnace slag from Blue Circle Cement Company). C-57 formulation was designated as HTC-Mix and more testing was conducted.

The C-57 (HTC-Mix) slurries were cured at 60 °C (140 °F), and cores were tested for Brinell hardness and crushed for compressive strength. The results are given in Table 3. There were no problems with slurry rheologies even at higher concentrations. Strength development is also excellent at this temperature.

C-57 is the most suitable formulation for the HTC-Mix composition. Both C-56 and C-62 formulations would be more expensive than C-57 due to higher material costs of ground glass and MC-100. The powdered glass is not commercially available at this time. MC-100 is a slag which is specially ground to ultra fine particle sizes.

TABLE 2 Compressive strengths of HTC-Mix formulations at 855 kg/m$^3$ (300 lb/bbl) in 1 138 kg/m$^3$ (9.5 lb/gal) laboratory Diatomite mud after heat aging at 204 °C (400 °F) for two weeks.

| Formulation | C-56B | C-57C | C-60 | C-61 | C-62 |
|---|---|---|---|---|---|
| Component | | Composition (wt%) | | | |
| Class A Cement | 59 | 33 | 33 | 50 | 33 |
| "SS-C200" * | 14 | 17 | 17 | 14 | 17 |
| "DIAMIX A" ** | - - | 14 | 14 | - - | 14 |
| Flyash, Type F | - - | - - | - - | - - | - - |
| Ground Glass | 24 | - - | 33 | 33 | - - |
| "NEWCEM" | - - | 33 | - - | - - | - - |
| "MC-100" | - - | - - | - - | - - | 33 |
| Na$_2$CO$_3$ | 3 | 3 | 3 | 3 | 3 |
| Compr. Strength (MPa) | 5.9 | 7.0 | 2.8 | 6.1 | 6.9 |
| (psi) | 850 | 1 020 | 405 | 880 | 1 000 |

* "SS-C2000" is sodium silicate made by PQ Corporation.

**"DIAMIX A" is Type N mined natural pozzolana by BJ Corporation.

TABLE 2 (Cont'd)

| Formulation Component | C-63[1] | C-64 | C-65 | C-66 | C-68[1] |
|---|---|---|---|---|---|
| | Composition (wt%) | | | | |
| Class A Cement | 33 | 33 | 32 | 33 | 33 |
| "SS-C200" | 16 | 17 | 17 | 17 | 17 |
| "DIAMIX A"* | 14 | 14 | -- | -- | -- |
| Flyash, Type F | -- | -- | -- | 14 | -- |
| Ground Glass | -- | -- | -- | -- | -- |
| "NEWCEM" | 17 | 23 | 48 | 33 | 47 |
| "MC-100" | 17 | 10 | -- | -- | -- |
| $Na_2CO_3$ | 3 | 3 | 3 | 3 | 3 |
| Compr. Strength (MPa) | 6.3 | 5.6 | 4.3 | 6.4 | 4.8 |
| (psi) | 910 | 810 | 625 | 930 | 700 |

*"DIAMIX A" is Type N mined natural pozzolana by BJ Corporation.

[1] A C-57 equivalent.

TABLE 3

| Compressive strengths of C-57 samples cured at 60 °C (140 °F) at varying concentrations for a laboratory Diatomite mud treated with 23 kg/m³ (8 lb/bbl) SPERSENE. | | | |
|---|---|---|---|
| C-57 Concentration (kg/m³, lb/bbl) | Compressive Strength (MPa, psi) | | |
| | UCA* | UCA* Core Crushed | Brinell Hardness |
| 998, 350 | 16.33, 2 369 | 21.10, 3 060 | 23.04, 3 341 |
| 855, 300 | 12.92, 1 874 | 9.41, 1 365** | 18.37, 2 664 |
| 656, 230 | 10.98, 1 593 | 11.45, 1 660 | 15.23, 2 209 |
| 570, 200 | 7.40, 1 073 | 11.65, 1 690 | 11.52, 1 671 |

*Ultrasonic Cement Analyzer by Halliburton.
**Sample was defective.

Table 3 demonstrates the effect of C-57 concentration on compressive strength. A 1 138 kg/m³ (9.5 lb/gal) lab Diatomite mud treated with 23 kg/m³ (8 lb/bbl) "SPERCENE CF" was used for the mud conversion. The higher the C-57 concentration, the stronger the cement becomes. In general, API compressive strengths or equivalent crushed compressive strength values of an HTC-Mix or S-Mix are about 1.5 times higher than the corresponding UCA compressive strengths.

A series of long-term exposure tests were conducted on C-57 slurries at 855 kg/m³ (300 lb/bbl) in a laboratory prepared Diatomite mud treated with 23 kg/m³ (8 lb/bbl) "SPERCENE CF" (MI Drilling Fluids lignosulphonate mud thinner). The HTC-Mix slurries were poured into two 13 cm (2-inch) cubic brass molds and cured in a high temperature curing chamber which was programmed to maintain 60 °C (140 °F) for three days and then ramped up to and held at 204 °C (400 °F) for a specified period of time. All high temperature strength data represent an average of two cubes. As shown in Table 4, the aging time was

6

varied from half day to six months. Obviously, one half day is not enough to cause complete strength retrogression at 204 °C (400 °F). However, the compressive strength of C-57 was fairly constant up to six months after initial strength reduction shown in two-week tests.

TABLE 4

| Long term compressive strength monitoring of 855 kg/m³ (300 lb/bbl) C-57 at 204 °C (400 °F). | | |
|---|---|---|
| Exposure Time | Compressive Strength (MPa, psi) | Number of Samples |
| 0.5 day | 13.03, 1890 | 2 |
| 2 weeks | 6.62, 960 | 14 |
| 1 month | 6.55, 950 | 4 |
| 2 months | 6.69, 970 | 2 |
| 3 months | 5.58, 810 | 2 |
| 6 months | 5.72, 830 | 2 |

An effort was made to determine an exact amount of chrome-free lignosulphonate thinner needed for an acceptable thickening time of five to eight hours at a BHCT (bottom hole circulation temperature) of 42 °C (107 °F). The effect of chrome-free lignosulphonate thinner concentration on thickening time of an HTC-Mix slurry prepared with 570 kg/m³ (200 lb/bbl) C-57 in a 1 138 kg/m³ (9.5 lb/gal) lab Diatomite mud was measured. The C-57 was dry blended using a standard C-57 formulation comprising 33% Riverside Class G cement, 17% "SS-C200" (sodium silicate made by PQ Corporation), 14% Bakersfield "POZMIX A" (flyash supplied by Halliburton), 3% soda ash, and 33% "NEWCEM" (blast furnace slag made by Blue Circle Cement Company). Thickening times were measured on an Autoclave Consistometer at a BHCT of 42 °C (107 °F) (heating rate 1 °C/min, 1.83 °F/min) and at 14 MPa (2 000 psi). Table 5 lists "SPERCENE CF" concentrations and resulting thickening times of this HTC-Mix slurry.

TABLE 5

| Thickening time versus "SPERCENE CF" concentration with a 570 kg/m³ (200 lb/bbl) C-57 in 1 138 kg/m³ (9.5 lb/gal) Diatomite mud. | |
|---|---|
| "SPERCENE CF"* Concentration (kg/m³, lb/bbl) | Thickening Time at 42 °C (107 °F) (Hr:Min) |
| 5.7, 2.00 | 2:08 |
| 6.0, 2.10 | 2:46 |
| 6.1, 2.15 | 2:50 |
| 6.3, 2.20 | 7:32 |
| 6.4, 2.25 | 14:37 |
| 7.1 2.50 | 17:36 |
| 8.6 3.00 | 16:44 |
| 8.6, 3.00 + 57 kg/m³ (20 lb/bbl) Gel | 1:42 |
| 14, 5.00 + 57 kg/m³ (20 lb/bbl) Gel | 18:45 |

*Chrome-free lignosulphonate made by MI Drilling Fluids.

Table 5 indicates that "SPERCENE CF" is a powerful retarder for this HTC-Mix slurry and the thickening time is very sensitive to the concentration of SPERSENE CF. An optimum concentration is 6.3 kg/m³ (2.2 lb/bbl) under this test condition. In order to check the sensitivity of "SPERCENE CF" concentration on thickening time, 57 kg/m³ (20 lb/bbl) bentonite was added to an HTC-Mix slurry containing 8.6 kg/m³ (3 lb/bbl) "SPERCENE CF". The thickening time was reduced from 16:44 to 1:42 due to the addition of gel. An addition of an extra amount of 5.7 kg/m³ (2 lb/bbl) "SPERCENE CF" to this slurry has brought the thickening time back to the original level.

In Table 6, the effect of "UNICAL CF" on the compressive strength development of C-57 slurry consisting of 1 090 kg/m³ (9.1 lb/gal) Diatomite field mud treated with 570 kg/m³ (200 lb/bbl) C-57 is shown. The higher the "UNICAL CF" concentration, the stronger the HTC-Mix becomes. There is no appreciable difference in rheology; there are dramatic differences in set strengths. UCA and API compressive strengths increase proportionally with the concentration of "UNICAL CF".

TABLE 6 Effect of "UNICAL CF", a chrome-free lignosulphonate made by Milpark, on rheology and compressive strength of a 570 kg/m$^3$ (200 lb/bbl) C-57 in 1 090 kg/m$^3$ (9.1 lb/gal) Diatomite mud. UCA set time determined at 3.5 MPa (500 psi).

| "UNICAL CF" Concentration (kg/m$^3$, lb/bbl) | Rheology (PV/YP) | UCA Compressive Strength (MPa, psi) | UCA Core Crushed Strength (MPa, psi) | UCA Set Time (hr:min) |
|---|---|---|---|---|
| 6.3, 2.2 | 12/15 | 3.08, 447 | 4.34, 630 | 5:36* |
| 17, 6.0 | 20/2 | 4.44, 644 | 7.31, 1 060 | 9:00 |
| 23, 8.0 | 13/6 | 5.05, 733 | 9.65, 1 400 | 8:29 |
| 28, 10.0 | 14/4 | 6.12, 888 | 10.62, 1 540 | 9:32 |
| 34, 12.0 | 13/3 | 6.78, 984 | 14.72, 2 070 | 8:34 |

PV - plastic viscosity, cp

YP - yield point, lb/100 ft$^2$ (=0.5 Pa).

Mud - 1 084 kg/m$^3$ (9.05 lb/gal) field mud from well 523-29 treated with 31 kg/m$^3$ (10.8 lb/bbl) sodium chloride.

*Time to reach at 3 MPa (447 psi).

The yield and density of HTC-Mix is calculates as follows. A "yield" value in cubic feet/sack of a slurry to be mixed must be entered to operate an automatic density control unit installed on some cement mixing units. As in any other cement calculations, a specific gravity and a bulk density are needed to calculate a yield value of HTC-Mix. Therefore, specific gravities and bulk densities of individual ingredients along with the C-57 HTC-Mix formulation are given in Table 7.

TABLE 7

| C-57 formulation and specific gravity (s.g.) and bulk density (b.d. in kg/m$^3$ and lb/ft$^3$) values. | | | |
|---|---|---|---|
| C-57 Component | Percent | s.g. | b.d. |
| Class G Cement | 33 | 3.14 | 1 500, 94 |
| "SSC-200" | 17 | 2.478 | 1 185, 74 |
| 2"POZMIX A" | 14 | 2.468 | 1 185, 74 |
| Soda Ash | 3 | 2.533 | 1 217, 76 (?) |
| Slag | 33 | 2.90 | 1 385, 86.5 |
| Composite Value | 100 | 2.84 | 1 358, 84.79 |

The calculated bulk density of the C-57 formulation is approximately 1 361 kg/m$^3$ (85 pounds/cubic foot) which was verified to be reasonable in the laboratory. The calculated specific gravity is 2.84 which was experimentally confirmed to be accurate.

A water flood injector well, 567-GR-29, and a producer well, 523-29 were cemented with HTC-Mix. These wells are located in the South Belridge Field, California.

An 1 378 kg/m$^3$ (11.5 lb/gal) HTC-Mix was pumped as the lead slurry which was designed to fill the 18 cm (7-inch) annulus from 61 m (200 feet) from the TD for (914 m, 3 000 feet) both Diatomite wells. The HTC-Mix, tail, and cap cements were dry blended at the service company bulk plant.

The HTC-Mix was mixed at 570 kg/m$^3$ (200 lb/bbl) in a 1 084 kg/m$^3$ (9.05 lb/gal) mud and pumped using the same equipment as a standard job with the exception of using drilling mud instead of water to mix cement. A "slotted pump shoe" was placed in the suction compartment of the mud pit to filter out drill cuttings which might otherwise plug up the cementing equipment. A portable centrifugal pump was used to pump the mud from the mud pit to the RCM cement mixing unit. All slurries were mixed and pumped "on the fly" using the RCM cement unit which was manually operated.

A 1 869 kg/m$^3$ (15.6 lb/gal) tail slurry consisting of Class H, 35% "SSA-1" (silica flour supplied by Halliburton) and 3% $CaCl_2$ was pumped to fill the bottom 61 m (200 feet). A small volume of 1 869 kg/m$^3$ (15.6 lb/gal) cap slurry consisting of Class H cement, 35% SSA-1, 3% $CaCl_2$, and a 5-kg (10-pound) sack of "CAL-SEAL" (calcium sulphate hemahydrate supplied by Halliburton) were also pumped down in the annulus at the completion of pumping the lead and tail cements. The cement designs were the same for both wells. Both cement jobs were placed successfully. An evaluation of these wells by cement bond logs, "CBT" (Cement Bond Tool by Schlumberger) and "CET" (Cement Evaluation Tool by Schlumberger) was very good.

Three special geophone wells were drilled and completed in the South Belridge field. A geophone assembly is 6 cm (2.2 inches) OD, 28 cm (11 inches) long, and connected to 150 pairs of twisted wire in 1.2 cm (1/2-inch) OD cable. An array of 50 geophones spaced every 1.5 m (5 feet) for high-resolution tomography over a 76-m (250-feet) interval was strapped on a 7.3 cm (2-7/8-inch) tubing. The tubing strapped with the geophone assemblies was used to place the geophones at a proper location in the wellbore and to pump cement through the tubing.

It was extremely critical for the success of the project to properly cement these geophone assemblies. In order to provide maximum acoustic transmission, a good bond as well as absence of any mud or air pockets in the wellbore were necessary. A low viscosity slurry was needed in order to completely fill all gaps and to cover irregularly shaped geophones.

For the purpose of logging these wells, a non-dispersed "NEWDRILL" (Milpark's partially hydrolyzed polyacrylamide polymer) mud was treated with sodium chloride to maintain a filtrate salinity from 18 000 to 20 000 ppm chloride for the first geophone well. Potassium chloride was used for the second and third geophone wells. The mud was treated with a higher level of lignosulphonate thinner in order to reduce the slurry viscosity and to provide higher compressive strengths. The type of salt used in the mud system and concentration of lignosulphonate thinner are as follows:

| Geophone Well ID | Type of Salt Used in Mud | Lignosulphonate Thinner Concencentration (kg/m$^3$, lb/bbl) |
|---|---|---|
| #1 | NaCl | 17, 6.0 |
| #2 | KCl | 17, 6.0 |
| #3 | KCl | 11, 4.0 |

HTC-Mix was dry blended. For each well, a total of 20 750 kg (45 757 pounds) of final blend containing 20 135 (44 400 pounds) of C-57 and 604 kg (1 333 pounds) of lignosulphonate (17 kg/m$^3$, 6 lb/bbl in mud) was prepared. The HTC-Mix was mixed with 1 084 kg/m$^3$ (9.05 lb/gal) mud at a ratio of 570 kg C-57 per m$^3$ of mud (200 pounds C-57 per barrel of mud). A total of 42 m$^3$ (267 barrels) HTC-Mix was pumped by mixing the dry blend into 35 m$^3$ (222 barrels) of the mud.

The HTC-Mix slurry was pumped at approximately 0.6 m$^3$ per minute (4 barrel per minute). A 25-sacks tail slurry was pumped to cover the casing shoe. This cementing procedure was used for all three geophone wells.

Mud densities for all three geophone wells were 1 084 kg/m$^3$ (9.05 lb/gal). The sample densities seem to be more uniform and slightly higher than the densometer readings.

All three HTC-Mix slurries were very thin. All the Fann 35 Viscometer 6 rpm and 3 rpm readings were zero. Plastic viscosities were low and yield point values were close to zero or less than zero. Although the 3-second gels were close to zero, 10-minute gels were much higher than the 3-second gels.

The success of cementing operations and the quality of cement jobs were evaluated by microseismic minifracture experiments. Signals from discrete microseismic events were excellent in all three observation wells.

The following examples relate to S-Mix.

S-Mix is formulated with blast furnace slag and common alkaline activators. S-Mix formulations were field tested in two Diatomite wells, 514L-29 and 568E-33, in the Belridge Field, California, and in a North Hobbs Unit well, 27-221W, in Hobbs, New Mexico. All cementing operations were successfully carried out.

A series of UCA strength development experiments was carried out by adding 641 kg/m$^3$ (225 lb/bbl) Colton ground slag to a 1 174 kg/m$^3$ (9.8 lb/gal) polymer mud (0.15 m$^3$ (0.94 bbl) water, 34 kg/m$^3$ (12 lb/bbl) bentonite, 2.4*10$^{-3}$ m$^3$/m$^3$ (0.1 gal/bbl) partially hydrolyzed polyacrylamide, 0.71 kg/m$^3$ (0.25 lb/bbl) carboxymethylcellulose, 171 kg/m$^3$ (60 lb/bbl) slag, 100 kg/m$^3$ (35 lb/bbl) "REVDUST", simulated drill solids by Milwhite) and by treating the resulting slurry with varying amounts of activators and thinners. A representative S-Mix formulation (641 kg/m$^3$ (225 lb/bbl) slag, 26 kg/m$^3$ (9 lb/bbl) NaOH, 8.5 kg/m$^3$ (3 lb/bbl) Na$_2$CO$_3$, and 11 kg/m$^3$ (4 lb/bbl) "MILTEMP", sulphonated styrene maleic anhydride copolymer from Milpark) was used for a full-scale displacement test. This S-Mix formulation had the following properties:

| | |
|---|---|
| Plastic Viscosity, cp | 19 |
| Yield Point, Pa, lb/100 ft$^2$ | 17, 34 |
| 10-sec Gel Strength, Pa, lb/100 ft$^2$ | 8, 16 |
| 10-min Gel Strength, Pa, lb/100 ft$^2$ | 16, 32 |
| Thickening Time at 49 °C (120°F), hr:min | 4:42 |
| API Fluid Loss, 27 °C (80 °F)/0.7 MPa (100 psi), ml | 31.4 |
| Cement Fluid Loss, 49 °C (120 °F)/7MPa(1000 psi), ml | 106 |
| API Free Water, ml | 0 |
| API Compressive Strength, MPa, psi (Aged at 60 °C (140 °F)/7 days, average of 6 samples) | 10.49, 1 531 |
| Shear Bond, MPa, psi (Aged at 60 °C (140 °F)/7 days, average of 4 samples) | 0.41, 59 |

A 1 114 kg/m$^3$ (9.3 lb/gal) PetroDrill (PHPA, partially hydrolyzed polyacrylamide, shale-controlling agent from UniBar) mud was converted into an 1 414 kg/m$^3$ (11.8 lb/gal) S-Mix slurry by adding 470 kg/m$^3$ (165 lb/bbl) Colton ground slag and 5.7 kg/m$^3$ (2 lb/bbl) Miltemp (SSMA) as a thinner and retarder.

For each Diatomite well, a total of 8 055 kg (17 900 lb) of S-Mix was dry blended at the service company yard. The formulation for the S-Mix and actual weights for each ingredient are as follows:

| | | |
|---|---|---|
| Colton Slag | 470 kg/m$^3$ (165 lb/bbl) | 16 500 lb |
| Caustic Soda Bead | 26 kg/m$^3$ (9 lb/bbl) | 900 lb |
| Soda Ash | 8.5 kg/m$^3$ (3 lb/bbl) | 300 lb |
| SSMA* | 5.7 kg/m$^3$ (2 lb/bbl) | 200 lb |

* sulphonated styrene maleic-anhydride copolymer by Milchem)

This formulation gives a yield of 0.09 m$^3$/sack (3.248 cu ft/sack) which is equivalent to a volume increase of 16.2 percent. Both S-Mix cementing jobs vent well operationally. Both wells had full cement returns.

Prior to the field test of the North Hobbs Unit well, six S-Mix formulations were tested using a 1 252 kg/m$^3$ (10.45 lb/gal) salt saturated mud on UCAs and these test results are tabulated in Table 8. The compressive strengths are reasonable despite the salt-saturated muds and low test temperatures. The UCA compressive strength plots indicate that SS-35 and SS-36 had the shortest set times (4 hr:15 min and 9:03, respectively), while SS-31 and SS-34 had the highest UCA compressive strengths (8.68 MPa, 1 259 psi and 8.18 MPa, 1 187 psi, respectively).

TABLE 8

| Effect of activators on UCA set time, UCA compressive strength (C.S) and crushed compressive strength (C.C.S.) of S-Mix in a 1 252 kg/m$^3$ (10.45 lb/gal) salt-saturated field mud. | | | | | | | |
|---|---|---|---|---|---|---|---|
| Sample Number | NaOH (lb/bbl) | Na$_2$CO$_3$ (lb/bbl) | Desco CF | Test Temp. (°F) | UCA* Set Time (Hr:Min) | C.S. (psi) | C.C.S. (psi) |
| SS-31 | 10 | 14 | - | 68 | 21:33 | 1 250[1] | 1 450 |
| SS-32 | 10 | 12 | - | 68 | 16.32 | 1 086[1] | 1 550 |
| SS-33 | 10 | 10 | - | 68 | 15:28 | 1 094[1] | 1 360 |
| SS-34 | 10 | 8 | - | 66 | 18:20 | 1 187[1] | 1 630 |
| SS-35 | 10 | 8 | 0.25 | 90 | 9:03 | 403[2] | - |
| SS-36 | 10 | 10 | 0.25 | 90 | 4:15 | 338[2] | - |
| Sample Number | NaOH (kg/m$^3$) | Na$_2$CO$_3$ (kg/m$^3$) | Desco CF | Test Temp. (°C) | UCA* Set Time (Hr:Min) | C.S. (MPa) | C.C.S. (MPa) |
| SS-31 | 28 | 40 | - | 20 | 21:33 | 8.68[1] | 10.00 |
| SS-32 | 28 | 34 | - | 20 | 16.32 | 7.49[1] | 10.69 |
| SS-33 | 28 | 28 | - | 20 | 15:28 | 7.54[1] | 9.38 |
| SS-34 | 28 | 23 | - | 19 | 18:20 | 8.18[1] | 11.24 |
| SS-35 | 28 | 23 | 0.25 | 32 | 9:03 | 2.78[2] | - |
| SS-36 | 28 | 28 | 0.25 | 32 | 4:15 | 2.33[2] | - |

*UCA set time to reach a compressive strength of 0.34 MPa (50 psi), hr:min.
[1]@ 16 days
[2]@ 1 day

All formulations contain 641 kg/m$^3$ (225 lb/bbl) Colton ground slag.

| Rheology of | SS-35 | SS-36 |
|---|---|---|
| Plastic Viscosity, cp | 21 | 22 |
| Yield Point, Pa, lb/100 ft$^2$ | 6.5, 13 | 1.5, 3 |
| Gel Strengths, Pa, lb/100 ft$^2$ | 4/29, 8/58 | 1/4, 2/8 |

The SS-36 formulation was chosen because of its faster UCA set time and good rheological properties. A volume of 42 m$^3$ (265 bbl) of 1 252 kg/m$^3$ (10.45 lb/gal) salt-saturated mud were converted to 51 m$^3$ (320 bbl) of 1 565 kg/m$^3$ (13.06 lb/gal) S-Mix by adding a dry blend of 641 kg/m$^3$ (225 lb/bbl) Colton ground slag, 28 kg/m$^3$ (10 lb/bbl) soda ash, 28 kg/m$^3$ (10 lb/bbl) caustic soda beads, and 0.71 kg/m$^3$ (0.25 lb/bbl) Desco CF (a chrome-free polyphenolic tannin mud thinner). It was dry blended in three approximately equal batches at the Service camp and transported to the well site. The blend was mixed with the field mud, 1 252 kg/m$^3$ (10.45 lb/gal) salt-saturated, and pumped at a rate of 1.6 m$^3$/minute (10 barrels per minute) using an RCM cement unit. The 14 cm (5.5-inch) long string (1 340 m, 4 395 feet TVD) was cemented in this way with this 1 558 kg/m$^3$ (13 lb/gal) S-Mix lead and a 1 797 kg/m$^3$ (15 lb/gal) conventional tail cement. (This well is a 26° directional well.) All aspects of the cementing operation went well except that the cement mixing operator had some difficulty maintaining a slurry density of 1 558 kg/m$^3$ (13 lb/gal).

While the slurry compositions methods of use of the invention have been described, many other variations will occur to those skilled in the art. It is intended that all such variations which fall with the scope of the appended claims be embraced thereby.

**Claims**

**1.** A method of cementing a well comprising

preparing a mud-cement by admixing a drilling mud and a cement material;

displacing the mud-cement to a preselected location in the well; and

allowing the mud-cement to harden and set up,
characterized in that the cement material is a mixture of blast furnace slag and/or powdered glass, and C-Mix which is a mixture of 20 to 60 wt% Portland cement, 10 to 50 wt% fly ash, 0 to 15 wt% soda ash, 0 to 50 wt% natural pozzolan, and 5 to 30 wt% powdered sodium silicate glass, wherein the amount of C-Mix is between 40 and 90 %wt of the total amount of blast furnace slag, C-Mix and powdered glass.

2. The method according to claim 1, further comprising admixing to the mixture an activator functional to cause the mud-cement to set up.

3. The method according to claim 2, wherein the activator is selected from the group consisting of sodium silicate, sodium fluoride, sodium silicofluoride, magnesium silicofluoride, zinc silicofluoride, sodium sulphate, sodium carbonate, potassium carbonate, sodium hydroxide, potassium hydroxide, and mixtures thereof.

4. The method according to claim 2 or 3, wherein the activator content is from 5 to 35% by weight of the total mixture.

5. The method according to any one of the claims 1-4, further comprising admixing to the drilling mud a thinner or retarder selected from the group consisting of lignosulphonate, lignite, sulphonated lignite, sulfomethylated humic acid, sulphonated styrene maleic-anhydride copolymer, polyacrylate-polyamide copolymer, organic acids, and mixtures thereof.

6. The method according to anyone of the claims 1-5, further comprising admixing to the mud-cement a material selected from the group consisting of chrome-free lignosulphonate, chrome-free de-sugared lignosulphonate, chrome-free sulfomethylated tree bark extract, and mixtures thereof to control viscosity and thickening time and to increase strength development of the mud-cement.

7. The method according to any one of the claims 1-6, wherein the drilling mud is selected from the group consisting of water-base mud, seawater mud, salt water mud, brine mud gypsum mud, lime mud, polymer mud, nondispersed mud, polyalcohol mud, oil-in-water emulsion mud, and mixtures thereof.

**Patentansprüche**

1. Verfahren zum Zementieren eines Bohrlochs,
bei dem man durch Vermischen eines Bohrschlamms und eines Zementmaterials einen Schlammzement herstellt,
diesen an eine vorgewählte Stelle im Bohrloch verbringt und
den Schlammzement härten und abbinden läßt,
dadurch gekennzeichnet, daß das Zementmaterial ein Gemisch aus Hochofenschlacke und/oder pulverisiertem Glas und C-Mix, einem Gemisch aus 20 bis 60 Gew.-% Portlandzement, 10 bis 50 Gew.-% Flugasche, 0 bis 15 Gew.-% kalzinierter Soda, 0 bis 50 Gew.-% natürlicher Puzzolanerde und 5 bis 30 Gew.-% pulverisiertem Natriumsilikatglas, ist, worin die Menge an C-Mix zwischen 40 und 90 Gew.-% der Gesamtmenge an Hochofenschlacke, C-Mix und pulverisiertem Glas ausmacht.

2. Verfahren nach Anspruch 1, ferner umfassend die Beimischung eines Aktivators zu dem Gemisch, dessen Funktion es ist, den Schlammzement abbinden zu lassen.

3. Verfahren nach Anspruch 2, worin der Aktivator aus der Gruppe Natriumsilicat, Natriumfluorid, Natriumsilicofluorid, Magnesiumsilicofluorid, Zinksilicofluorid, Natriumsulfat, Natriumcarbonat, Kaliumcarbonat, Natriumhydroxid, Kaliumhydroxid und deren Gemische ausgewählt ist.

4. Verfahren nach Anspruch 2 oder 3, worin der Aktivatorgehalt 5 bis 35 Gew.-% des Gesamtgemischs beträgt.

5. Verfahren nach einem der Ansprüche 1-4, ferner umfassend die Beimischung eines aus der Gruppe Lignosulfonat, Braunkohle, sulfonierte Braunkohle, sulfomethylierte Huminsäure, sulfoniertes Styrol/Maleinsäureanhydridcopolymer, Polyacrylat/Polyamidcopolymer, organische Säuren und deren Gemische ausgewählten Verdünners oder Verzögerers zu dem Bohrschlamm.

6. Verfahren nach einem der Ansprüche 1-5, ferner umfassend die Beimischung eines aus der Gruppe chromfreies Lignosulfonat, chromfreies entzuckertes Lignosulfonat, chromfreier sulfomethylierter Baumrindenextrakt und deren Gemische ausgewählten Materials zum Schlammzement zur Steuerung der Viskosität und Verdickungszeit und zur Förderung der Festigkeitsentwicklung des Schlammzements.

7. Verfahren nach einem der Ansprüche 1-6, worin der Bohrschlamm aus der Gruppe Schlamm auf Wassergrundlage, Seewasserschlamm, Salzwasserschlamm, Soleschlamm, Gipsschlamm, Kalkschlamm, Polymerschlamm, nicht dispergierter Schlamm, Polyalkoholschlamm, Öl-in-Wasseremulsion und deren Gemische ausgewählt ist.

**Revendications**

1. Méthode de cimentation d'un puits comprenant
   la préparation d'un ciment de boue de forage par l'adjonction par mélange d'une boue de forage et d'un matériau de ciment;
   le déplacement du ciment de boue de forage à un endroit présélectionné dans le puits; et
   le durcissement et la prise du ciment de boue de forage,
   caractérisée en ce que le matériau de ciment est un mélange de laitier de haut-fourneau et/ou de verre en poudre, et de mélange C, qui est un mélange de 20 à 60 % en poids de ciment portland, de 10 à 50 % en poids de suie, de 0 à 15 % en poids de soude calcinée, de 0 à 50 % en poids de pouzzolane naturelle et de 5 à 30 % en poids de verre de silicate de sodium en poudre, la quantité de mélange C étant compris entre 40 et 90 % en poids de la quantité totale de laitier de haut-fourneau, de mélange C et de verre en poudre.

2. Méthode selon la revendication 1, comprenant en plus l'adjonction par mélange au mélange d'un agent d'activation fonctionnel destiné à causer la prise du ciment de boue de forage.

3. Méthode selon la revendication 2, caractérisée en ce que l'agent d'activation est choisi parmi le groupe se composant du silicate de sodium, du fluorure de sodium, du silicofluorure de sodium, du silicofluorure de magnésium, du silicofluorure de zinc, du sulfate de sodium, du carbonate de sodium, du carbonate de potassium, de l'hydroxyde de sodium, de l'hydroxyde de potassium et de leurs mélanges.

4. Méthode selon la revendication 2 ou 3, caractérisée en ce que la teneur en agent d'activation est comprise entre 5 et 35 % en poids du mélange total.

5. Méthode selon l'une quelconque des revendications 1-4, comprenant en plus l'adjonction par mélange à la boue de forage d'un agent diluant ou d'un agent retardateur de prise choisi parmi le groupe se composant du lignosulfonate, de la lignite, de la lignite sulfonée, de l'acide humique sulfométhylé, de copolymère sulfoné styrène anhydride maléique, de copolymère polyacrylate polyamide, d'acides organiques et de leurs mélanges.

6. Méthode selon l'une quelconque des revendications 1-5, comprenant en plus l'adjonction par mélange au ciment de boue de forage d'un matériau choisi parmi le groupe se composant de lignosulfonate exempt de chrome, de lignosulfonate désucré exempt de chrome, d'extrait d'écorce d'arbre sulfométhylé exempt de chrome, et de leurs mélanges en vue du contrôle de la viscosité et du temps d'épaississement et en vue de l'augmentation du développement de la résistance du ciment de boue de forage.

7. Méthode selon l'une quelconque des revendications 1-6, caractérisée en ce que la boue de forage est choisie parmi le groupe se composant de boue à base d'eau, de boue à l'eau de mer, de boue à l'eau salée, de boue de saumure, de boue à gypse, de boue carbonatée, de boue de polymère, de boue non dispersée, de boue de polyalcool, de boue à émulsion huile-dans-eau et de leurs mélanges.